# EUROPÄISCHE PATENTSCHRIFT

(11) **EP 1 122 468 B1**
(45) Veröffentlichungstag und Bekanntmachung des Hinweises auf die Patenterteilung: **07.05.2003**
(21) Anmeldenummer: 00102410.8
(22) Anmeldetag: 04.02.2000
(51) Int. Cl.: F16H 63/20

(54) **Schaltvorrichtung für ein Wechselgetriebe eines Kraftfahrzeuges**
Shift mechanism for change-speed gearing of a motor vehicle
Dispositif de changement de vitesse pour une boîte de vitesses d'un véhicule automobile

(43) Veröffentlichungstag der Anmeldung: 08.08.2001
(73) Patentinhaber: Ford Global Technologies, Inc., A subsidiary of Ford Motor Company, Dearborn, Michigan 48126 (US)
(72) Erfinder: Bungart, Stephan, 42855 Remscheid (DE)
(74) Vertreter: Messulam, Alec Moses

(56) Entgegenhaltungen:
- DE-A- 3 246 943
- US-A- 4 132 125
- US-A- 5 285 694

## Beschreibung

Die Erfindung bezieht sich auf eine Schaltvorrichtung für ein Wechselgetriebe eines Kraftfahrzeuges mit den Merkmalen des Oberbegriffs des Anspruchs 1, wie sie aus der DE-A-3246943 bekannt sind.

Aus der DE 30 37 990 A1 ist ein Doppelkupplung-Wechselgetriebe bekannt, bei dem die über Schiebemuffen einschaltbaren, zwei unterschiedlichen Antriebssträngen zugeordneten Zahnradpaare der verschiedenen Gangstufen über eine Schaltkulisse ein- und ausgerückt werden können, die im wesentlichen aus einer ebenen oder aus einer auf einer Schalttrommel angeordneten Bolzen/Schlitz-Anordnung gebildet ist.

Bei dem bekannten Wechselgetriebe für ein Kraftfahrzeug handelt es sich um ein zugkraftunterbrechungsfrei, hilfskraftbetätigt schaltbares, automatisiertes Wechselgetriebe, für das die Anordnung einer solchen Schaltkulisse auf einer Schalttrommel hinlänglich bekannt ist.

Bei einem modularen Getriebekonzept für ein 6-Gang-Vorgeiege-Wechselgetriebe für Kraftfahrzeuge gemäss der EP -A-10 77 336, veröffenflicht am 21.2.2001, ist neben der zugkraftunterbrechungsfreien und hilfskraftbetätigten Ausführung des Wechselgetriebes auch eine manuell schaltbare Ausführung des Wechselgetriebes vorgesehen, wobei mit möglichst vielen gleichen Bauteilen die unterschiedlichen Version montiert werden sollen.

Dementsprechend ist an dem modularen Wechselgetriebe am inneren Schaltgestänge alles vorgesehen, was für eine Betätigung über eine Schaltkulisse erforderlich ist. Insbesondere sind an den Schaltgabeln die erforderlichen Bolzen, Gleitsteine oder entsprechend drehbar gelagerte Rollen angeordnet, die mit entsprechenden Schlitzen in einer Schaltkulisse auf einer Schalttrommel zusammenwirken können.

Für die von Hand schaltbare Ausführung des Wechselgetriebes besteht somit die Erfordernis, die äussere Schaltbetätigung an die durch die innere Schaltbetätigung gegebenen Anschlussverhältnisse anzupassen.

Gemäss der Erfindung wird diese Aufgabe gelöst, durch die Merkmale des Anspruchs 1

In den Ansprüchen 2 und 3 sind weitere Ausführungsformen der Erfindung erläutert.

Dadurch, dass die Vorwahl- und Einrückbewegungen des Handschalthebels über ein Schaltgestänge- oder eine Bowdenkabelverbindung auf ein Teilsegment einer Schalttrommel übertragen werden, das drehbar und axial verschiebbar gegenüber den mit Bolzen versehenen Schaltgabeln der inneren Schaltbetätigung versehen ist, wird unter Beibehaltung der wesentlichen Teile der inneren Schaltbetätigung eine einfache und zuverlässige Betätigung als Handschaltgetriebe ermöglicht.

Die Erfindung wird anhand zweier in den Zeichnungen gezeigten Ausführungsformen näher erläutert. Es zeigt:
- Fig. 1: eine schematische Perspektivansicht einer erfindungsgemässen äusseren Schaltbetätigung mit einem Schalttrommelsegment gemäss der Erfindung;
- Fig. 2: eine Abwicklung des Schaltsegmentes in der einen Ausführungsform, in der eine Vorwahlbewegung durch Verdrehen und eine Schaltbewegung durch Axialbewegung erfolgt und angedeuteten Sicherungsblech;
- Fig. 3: eine getrennte Darstellung des Sicherungsbleches;
- Fig. 4: eine Abwicklung eines Schaltsegmentes in einer Ausführungsform, in der eine Vorwahlbewegung durch Axialverschieben und eine Schaltbewegung durch Verdrehen erfolgt;
- Fig. 5: eine Abwicklung eines Schaltsegmentes in einer Ausführungsform, in der an einem Wechselgetriebe mit einer Räderanordnung wie für eine zugkraftunterbrechungsfreie und hilfskraftbetätigten Form, das normale Handschaltschema bereitgestellt wird;

- Fig. 6: eine Abwicklung einer weiteren Ausführungsform eines Schaltsegmentes, bei der die Bolzen der Schaltgabeln nicht nur in einer Axialebene, sondern in zwei zueinander im Winkel und versetzt liegenden Ebenen angeordnet sind; und
- Fig. 7: eine Abwicklung einer weiteren Ausführungsform eines Schaltsegmentes, bei der die Bolzen der Schaltgabeln nicht nur in einer Axialebene, sondern in zwei zueinander im Winkel und versetzt liegenden Ebenen angeordnet sind.

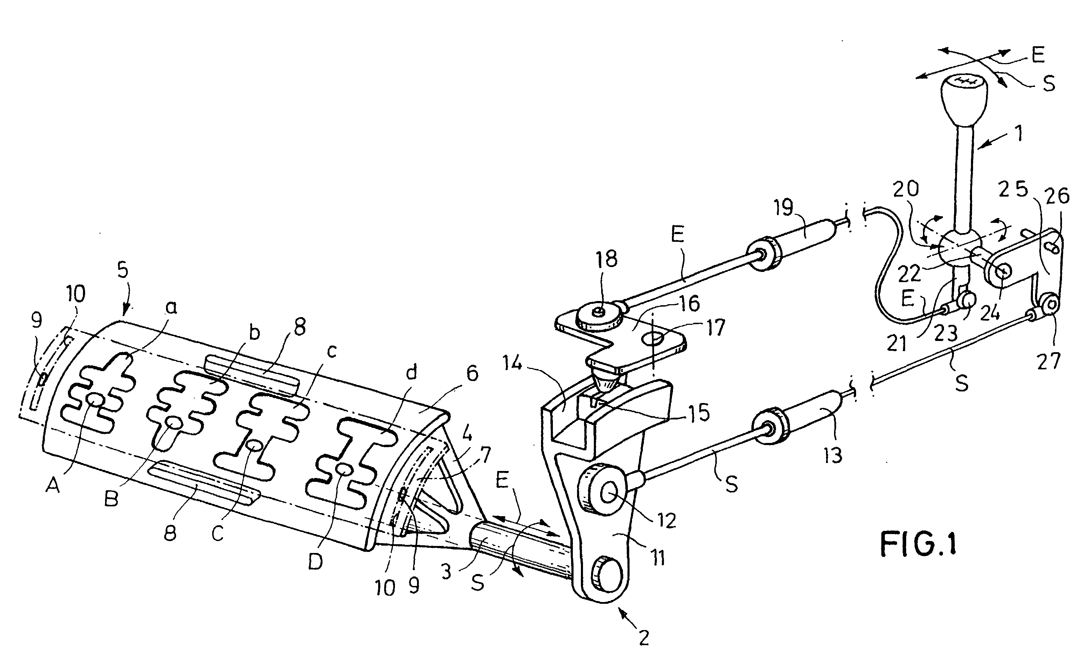

In Fig. 1 ist schematisch ein Schalthebel 1 angedeutet, der in üblicher Weise im Kraftfahrzeug auf der Mittelkonsole angeordnet ist. Vom Schalthebel 1 wird eine Vorwahlbewegung S und eine Einrückbewegung E entweder über ein Schaltgestänge oder, wie angedeutet, über zwei Bowdenzüge auf eine äussere Schaltvorrichtung 2 übertragen, die im wesentlichen aus einer in einem Gehäuse (nicht gezeigt) radial verschwenkbaren und axial verschiebbaren Schaltwelle 3 besteht, auf der über sektorförmige Konsolen 4 und 5 ein zylinderförmiges Schaltsegment 6 drehfest angeordnet ist, dem ein Sicherungsblech 7 überlagert ist, das sich mit dem Schaltsegment 6 durch Fixierstege 8 mitdrehen kann, aber gleichzeitig durch Arretierungen in Form von Vorsprüngen 9 am Getriebegehäuse, die in Schlitze 10 am Sicherungsblech 7 eingreifen, an einer translatorischen Bewegung gehindert wird und somit ein unbeabsichtigtes Einlegen eines anderen Ganges verhindert.

Das Schaltsegment 6 weist vier Schlitzkonturen a, b, c und d auf, mit dem es mit Bolzen, Gleitsteine oder Rollen A, B, C und D an Schaltgabeln (nicht gezeigt) zusammenwirkt.

Das Sicherungsblech 7 soll mit seinen Schlitzkonturen e, f, g und h verhindern, dass ohne Einwirkung von aussen selbständig ein Gang (z.B. durch Vibrationen) bzw. der falsche Gang eingelegt wird.

Betrachtet man sich die Stellung des Schaltsegmentes 6 in Bild 2, dann kann man erkennen, dass zwar durch eine beabsichtigte translatorische Bewegung des Schaltsegmentes die Gänge 3/4 geschaltet werden können, aber in Ruheposition wie hier gezeigt (Bild 2) sich infolge von Vibration und Eigenbewegungen der freien Schaltgabeln für den 1/2., NR., und 5/6. Gang unbeabsichtigt ein Gang einlegen kann.

Die radial verschwenkbar und axial verschiebbare Schaltwelle 3 ist an ihrem einen Ende mit einem Hebel 11 verbunden, an den über einen Bolzen 12 der die Vorwählbewegung S übertragende Bowdenzug 13 angreift.

Das freie Ende des Hebels 11 ist mit einer sich bogenförmig erstreckenden gabelförmigen Führung 14 versehen, in die ein Gleitstein 15 eines Winkelhebels 16 eingreift, der um einen ortsfesten Bolzen 17 schwenkbar gelagert ist und an dessen anderen Ende an einem Bolzen 18, der die Einrückbewegung E übertragende Bowdenzug 19 angreift.

Der Schalthebel 1 weist in bekannter Weise eine Kugelgelenklagerung 20 auf, von der sich zwei Hebelarme 21 und 22 radial erstrecken.

Der eine Hebelarm 21 ist unmittelbar über ein Gelenk 23 mit dem die Schaltbewegung E übertragenden Bowdenzug 19 verbunden.

Der andere Hebelarm 22 greift über ein Gelenk 24 am einen Arm eines Winkelhebels 25 an, der im Schalthebelgehäuse (nicht gezeigt) um einen Bolzen 26 schwenkbar gelagert ist und dessen anderer Arm über ein Gelenk 27 mit dem die Vorwählbewegung S übertragenden Bowdenzug 13 verbunden ist.

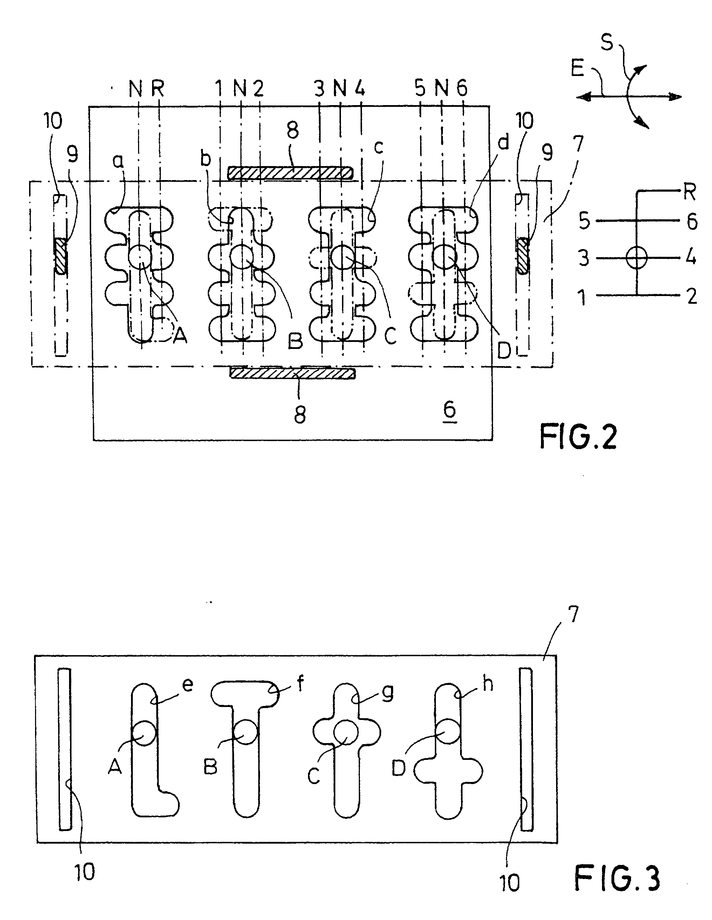

Wie aus der Ansicht in Fig. 1 und der Zusammenschau mit der Abwicklung in Fig. 2 ersichtlich wird, wirkt das Schaltsegment 6 mit seinen vier Schlitzkonturen a, b, c und d, mit jeweils einem Bolzen, einem Gleitstein oder einer Rolle A, B, C und D zusammen, die einer Schaltgabel der inneren Schaltbetätigung (nicht gezeigt) zugeordnet sind. Die mögliche Bewegung des Schaltsegmentes 6 ist durch die Pfeile S für die Vorwählbewegung und E für die Einrückbewegung angedeutet. Durch die benachbarte Anordnung des herkömmlichen Doppel-H-Schaltschemas ist ohne weiteres zu erkennen, wie nachfolgend einer Vorwählbewegung die entsprechende Schaltung erfolgen kann.

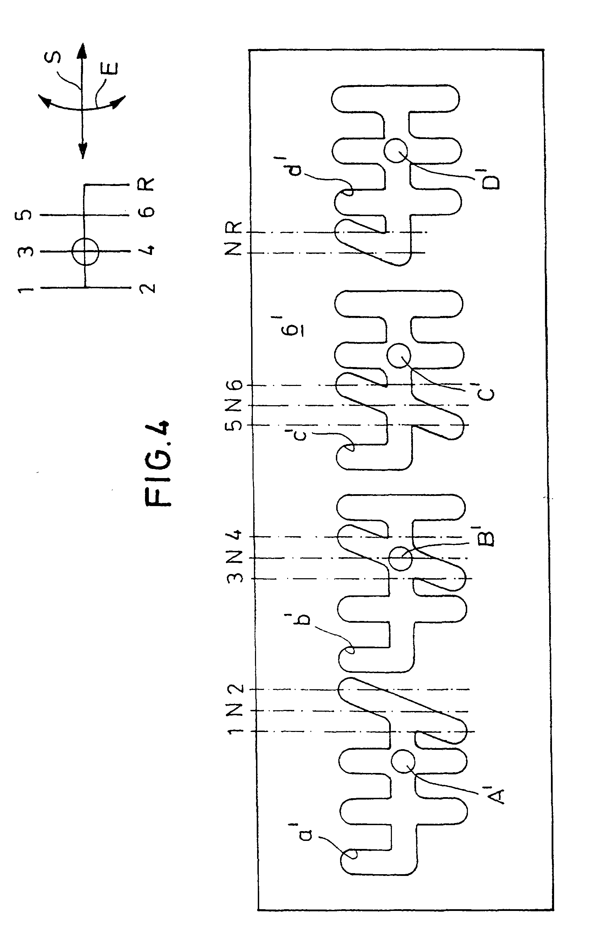

In Fig. 4 ist eine weitere Ausführungsform eines Schaltsegmentes 6' gemäss der Erfindung gezeigt, wobei für die an den inneren Schaltgabeln vorgesehenen Bolzen A', B', C' und D' vier Schlitzkonturen a', b' c' und d' vorgesehen sind und durch die Pfeile S die Vorwahlbewegung und E die Einrückbewegung angedeutet sind, die in diesem Fall miteinander vertauscht sind, d.h., die Vorwählbewegung S erfolgt durch ein axiales Verschieben des Schaltsegmentes 6', während die Einrückbewegung E durch ein radiales Verschwenken des Schaltsegmentes 6' erfolgt.

Auch hier ist durch Vergleich mit dem benachbarten Doppel-H-Schaltschema leicht ersichtlich, wie die Schlitzkonturen dafür Sorge tragen, dass bei einer erfolgten Vorwahlbewegung nur jeweils die benachbarten Gänge durch die Einrückbewegung eingerückt werden können. Die nicht vorgewählten Gänge bleiben hierbei durch die Schlitzkonturen im Zusammenwirken mit einem entsprechend angepassten Sicherungsblech (nicht gezeigt) gesperrt.

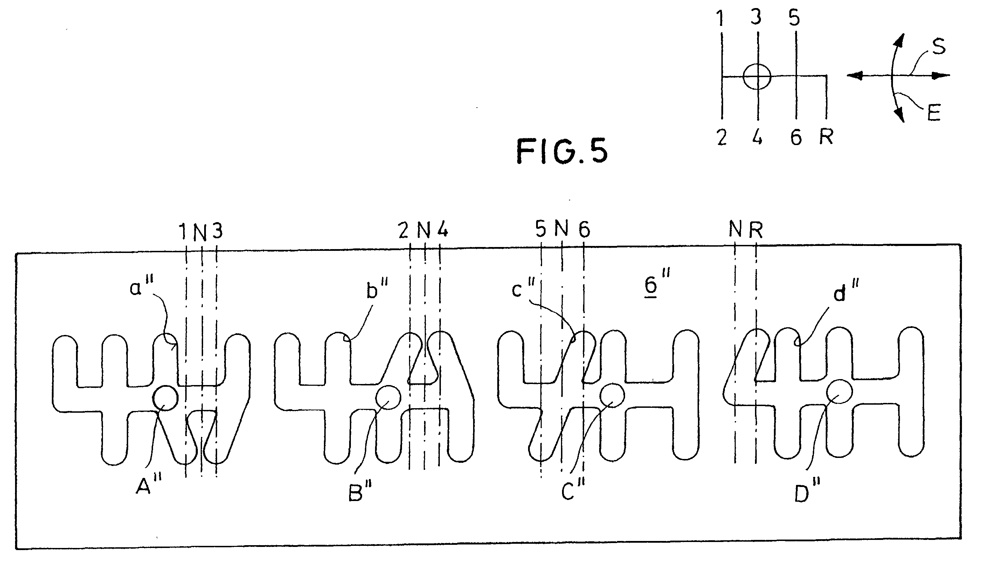

In Fig. 5 ist eine weitere Ausführungsform eines Schaltsegmentes 6" gemäss der Erfindung gezeigt, die unter Beibehaltung der Räderanordnung im Wechselgetriebe, die für eine zugkraftunterbrechungsfreie und hilfskraftbetätigte schaltbare Form vorgesehen ist, nur durch die anderen Schlitzkonturen a" und b" das für eine Ausführung mit Handschaltung gewünschte herkömmliche H- oder H-H-Schaltschema zur Verfügung stellt. Auch hier wird ein entsprechend angepasstes Sicherungsblech (nicht gezeigt) vorgesehen.

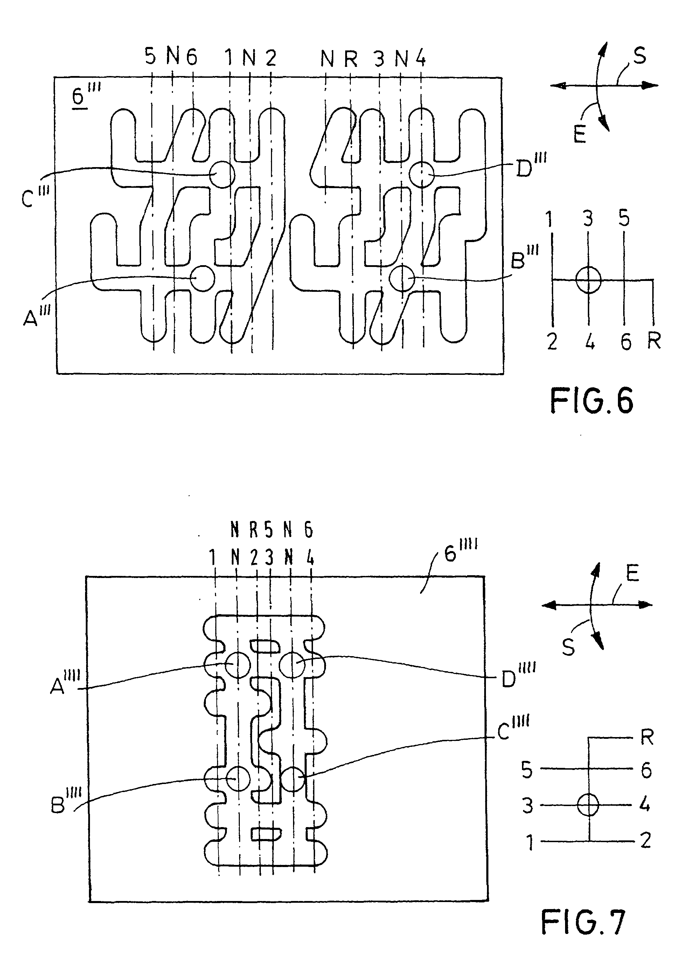

In Fig. 6 ist eine weitere Form eines Schaltsegmentes 6"' gezeigt, das angewendet werden kann, wenn die die Bolzen A"', B"', C''' und D''' tragenden Schaltgabeln der inneren Schaltbetätigung nicht nur in einer Ebene, sondern in zueinander im Winkel und versetzt liegenden Fächerebenen angeordnet sind.

in Fig. 7 ist eine weitere Form eines Schaltsegmentes 6"" gezeigt, das angewendet werden kann, wenn die die Bolzen A"", B"", C"" und D"" tragenden Schaltgabeln der inneren Schaltbetätigung nicht nur in einer Ebene, sondern in zueinander im Winkel und versetzt liegenden Fächerebenen angeordnet sind.

## Patentansprüche

1. Schaltvorrichtung für ein Wechselgetriebe eines Kraftfahrzeuges, mit
- einem im Kraftfahrzeug angeordneten Handschalthebel (1), der in bekannter Weise in einer H- oder Doppel-H-Kulisse zum Vorwählen von Schaltgassen und Einrücken von Gängen bewegbar ist,
- mit Schiebemuffen und Schaltgabeln, wobei die Schiebemuffen von im Wechselgetriebe zwischen jeweils zwei lose laufenden Zahnrädern angeordneten Synchronisiereinrichtungen über die Schaltgabeln betätigbar sind, deren Bolzen, Gleitsteine oder Rollen zumindest von Teilen einer Schalttrommel über Schlitzkonturen betätigbar sind,
- wobei die Vorwähl- und Einrückbewegungen des Handschalthebels (1) über eine Schaltgestänge- oder Bowdenkabel-Verbindung auf eine äußere Schaltvorrichtung (2) übertragen werden, die aus einem Schaltsegment einer Schalttrommel besteht, das in einem Gehäuse begrenzt verdrehbar und axial verschiebbar angeordnet ist und die Schlitzkonturen aufweist, die mit den Bolzen, Gleitsteinen oder Rollen an den Schaltgabeln zusammenwirken,
**dadurch gekennzeichnet, daß**
- dem Schaltsegment ein Sicherungsblech (7) überlagert ist, das mit bestimmten Schlitzkonturen mit den Bolzen an den Schaltgabeln zusammenwirkt, um ein unbeabsichtigtes, selbständiges Einrücken von Gängen, beispielsweise durch Vibrationen, zu verhindern.

2. Schaltvorrichtung nach Anspruch 1, **dadurch gekennzeichnet, daß**
- die Schaltgestänge- oder Bowdenkabel-Verbindung mit einem Hebel (11) gekoppelt ist, der auf das Schaltsegment (6) verschwenkend einwirkt und somit die Vorwählbewegung bewirkt,
- die Schaltgestänge- oder Bowdenkabel-Verbindung mit einem Winkelhebel (16) gekoppelt ist, der über eine Gleitstein/Schaltgabel-Anordnung auf das Schaltsegment (6) einwirkt und dieses axial verschiebt und somit die Einrückbewegung bewirkt, und
- die mit den Bolzen, Gleitsteinen oder Rollen zusammenwirkenden Schlitzkonturen jeweils für den vorgewählten Gang ein Einrücken und für die nicht vorgewählten Gänge ein Freilaufen bzw. Sperren bewirken.

3. Schaltvorrichtung nach Anspruch 1,
**dadurch gekennzeichnet, dass**
- die Vorwählbewegung (S) auf das Schaltsegment dieses verschiebend einwirkt,
- die Einrückbewegung (E) auf das Schaltsegment dieses radial verschwenkend einwirkt und
- das Schaltsegment die Schlitzkonturen für die Bolzen der Schaltgabeln aufweist, die jeweils für einen gewählten Gang ein Einrücken und für die nicht gewählten Gänge ein Freilaufen bzw. Sperren bewirken.

4. Schaltvorrichtung nach Anspruch 1,
**dadurch gekennzeichnet, dass**
- das Sicherungsblech (7) über entsprechende Fixierstege 8 und eine Vorsprung/Schlitz-Führung (9/10) jeweils nur die Vorwählbewegung mitvollziehen kann.

## Claims

1. Shift mechanism for change-speed gearing of a motor vehicle, with
- a hand shift lever (1) arranged in the motor vehicle, which is movable in the known way in an H or double H slide for pre-selecting shift paths and engaging gears,
- with sliding sleeves and shift forks, wherein the sliding sleeves can be activated by synchronisation devices over the shift forks arranged in the change-speed gearing between two loose running gear wheels, whose bolts, slippers or rollers can be activated at least by parts of a shift drum through recess contours,
- wherein the pre-selection and engagement movements of the hand shift lever (1) are transferred through a shift rod or Bowden cable connection onto an external shift device (2), which consists of a shift segment of a shift drum, which is arranged in a gearbox in such a way that it can pivot and be axially displaced to a limited extent and which has recess contours, which work in association with the bolts, slippers or rollers on the shift forks,
**characterised in that**
- a locking plate (7) overlies the shift segment, wherein the locking plate (7) works in association with certain recess contours with the bolts on the shift forks, in order to prevent an unintentional, independent engagement of gears, for example through vibrations.

2. Shift device according to Claim 1, **characterised in that**
- the shift rod or Bowden cable connection is coupled with a lever (11), which has a pivoting effect upon the shift segment (6) and thus brings about the pre-selection movement,
- the shift rod or Bowden cable connection is coupled with an angled lever (16) which through a slipper / shift fork arrangement (6) acts upon the shift segment (6) and displaces the latter axially and thus brings about the engagement movement, and
- the recess contours working in association with the bolts, slippers or rollers bring about engagement for the pre-selected gear and freewheeling or locking for the gears which have not been selected.

3. Shift device according to Claim 1,
**characterised in that**
- the pre-selection movement (S) has an effect upon the shift segment, displacing the latter,
- the engagement movement (E) has an effect upon the shift segment, pivoting the latter in a radial way and
- the shift segment has the recess contours for the bolts of the shift forks, which bring about engagement for a selected gear and freewheeling or locking for gears which have not been selected.

4. Shift device according to Claim 1,
**characterised in that**
- the locking plate (7), through corresponding fixing webs 8 and a shoulder / recess guide (9/10) can only carry out the pre-selection movement.

## Revendications

1. Dispositif de changement de vitesse destiné à une boîte de vitesses d'un véhicule automobile, comprenant
- un levier de changement de vitesse (1), disposé dans le véhicule, qui peut être déplacé de manière connue dans une coulisse en H ou en double H pour la présélection des rapports de vitesse et l'engrènement des vitesses,
- des manchons coulissants et des fourchettes d'embrayage, les manchons coulissants pouvant être actionnés par des synchroniseurs disposés dans la boîte de vitesses, chacun entre deux roues dentées libres, par l'intermédiaire des fourchettes d'embrayage, dont les axes, coulisseaux de direction ou rouleaux sont actionnés au moins par des parties d'un tambour de commande par l'intermédiaire de contours de fentes,
- dans lequel dispositif les mouvements de présélection et d'engrènement du levier de changement de vitesse (1) sont transmis par l'intermédiaire d'une transmission par tringlage ou d'une transmission par câbles Bowden sur un dispositif de changement de vitesse externe (2), qui est formé par un segment d'un tambour de commande, qui est logé dans un carter de manière à pouvoir tourner de manière limitée et se déplacer dans le sens axial et qui est muni de contours de fentes qui agissent conjointement avec les axes, coulisseaux de direction ou rouleaux, disposés sur les fourchettes d'embrayage,
**caractérisé en ce que**
- une plaque métallique de sécurité (7) est disposée au-dessus ou posée sur le segment de commande, laquelle agit conjointement par des contours de fentes déterminés avec les axes disposés sur les fourchettes d'embrayage, afin d'empêcher un engrènement automatique involontaire des vitesses, à la suite de vibrations par exemple.

2. Dispositif de changement de vitesse selon la revendication 1, **caractérisé en ce que**
- la transmission par tringlage ou par câbles Bowden est couplée à un levier (11), qui fait pivoter le segment de commande (6) et exécute ainsi le mouvement de présélection,
- la transmission par tringlage ou par câbles Bowden est couplée à un levier coudé (16), qui agit sur le segment de commande (6) par l'intermédiaire d'un système de coulisseaux de direction et fourchettes d'embrayage et déplace ledit segment dans le sens axial et exécute ainsi le mouvement d'engrènement, et
- les contours des fentes, qui agissent conjointement avec les axes, coulisseaux de direction ou rouleaux, produisent un engrènement pour la vitesse présélectionnée et une course libre ou blocage pour les vitesses non présélectionnées.

3. Dispositif de changement de vitesse selon la revendication 1, **caractérisé en ce que**
- le mouvement de présélection (S) agit sur le segment de commande en déplaçant celui-ci,
- le mouvement d'engrènement (E) agit sur le segment de commande en le faisant pivoter dans le sens radial, et
- le segment de commande comporte les contours de fentes pour les axes des fourchettes d'embrayage, qui produisent respectivement un engrènement pour une vitesse sélectionnée et une course libre ou blocage pour les vitesses non sélectionnées.

4. Dispositif de changement de vitesse selon la revendication 1, **caractérisé en ce que**
- la plaque métallique de sécurité (7) ne peut suivre que le mouvement de présélection par l'intermédiaire de traverses de blocage (8) correspondantes et d'un système de guidage par saillie et fente (9/10).
